(19) Europäisches Patentamt
European Patent Office
Office européen des brevets

(11) **EP 3 835 727 B1**

(12) **EUROPÄISCHE PATENTSCHRIFT**

(45) Veröffentlichungstag und Bekanntmachung des Hinweises auf die Patenterteilung:
**13.07.2022 Patentblatt 2022/28**

(21) Anmeldenummer: **20210902.1**

(22) Anmeldetag: **01.12.2020**

(51) Internationale Patentklassifikation (IPC):
**G01D 5/347** *(2006.01)* **G01D 5/38** *(2006.01)*

(52) Gemeinsame Patentklassifikation (CPC):
**G01D 5/34715; G01D 5/34792; G01D 5/38**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2019 DE 102019219151**

(43) Veröffentlichungstag der Anmeldung:
**16.06.2021 Patentblatt 2021/24**

(73) Patentinhaber: **Dr. Johannes Heidenhain GmbH 83301 Traunreut (DE)**

(72) Erfinder: **SÄNDIG, Karsten 83349 Palling (DE)**

(56) Entgegenhaltungen:
**EP-A1- 1 867 960       EP-A2- 0 896 206**
**DE-A1-102007 035 345**

**Beschreibung**

GEBIET DER TECHNIK

Die vorliegende Erfindung betrifft eine optische Positionsmesseinrichtung.

STAND DER TECHNIK

Bekannte Positionsmesseinrichtungen liefern neben periodischen Inkrementalsignalen bzgl. des Relativversatzes zweier zueinander beweglicher Objekte auch sogenannte Referenzsignale. Über die Referenzsignale kann an vorgegebenen Referenzpositionen entlang der Messstrecke ein exakter Absolutbezug bezüglich der Position der beiden zueinander beweglichen Objekte hergestellt werden. Auf die derart bestimmte Absolutposition wird dann die üblicherweise deutlich höher auflösende Inkrementalmessung nachfolgend bezogen. Zur Erzeugung von Referenzsignalen sind bereits eine Vielzahl von Möglichkeiten bekannt geworden. Hierzu sei beispielsweise auf die Druckschrift DE 10 2007 035 345 A1 der Anmelderin verwiesen, von der bei der Bildung des Oberbegriffs von Anspruch 1 ausgegangen wurde. Um Referenzsignale zu erzeugen, werden in dieser Druckschrift diffraktive Referenzmarkierungsstrukturen zwischen zwei Inkrementalspuren auf der Maßverkörperung an der Referenzposition angeordnet. Aus der Abtastung der Referenzmarkierung resultiert an den jeweiligen Position ein entsprechendes Referenzsignal. Insbesondere bei hochauflösenden optischen Positionsmesseinrichtungen, die im Auflicht betrieben werden, resultieren nunmehr bestimmte Anforderungen an die Erzeugung der Referenzsignale. So sollte auch bei einer eventuellen Verkippung von Abtasteinheit und Reflexions-Maßverkörperung, z.B. verursacht durch eine nichtoptimale Montage derselben, möglichst kein Positionsfehler resultieren. Dies gilt hierbei sowohl für die Erzeugung der Inkrementalsignale als auch für die Erzeugung der Referenzsignale. Zur Lösung dieser Problematik wird in der DE 10 2007 035 345 A1 vorgeschlagen, dass in der entsprechenden Positionsmesseinrichtung das gleiche Verhalten bezüglich einer Verkippung von Abtasteinheit und Reflexions-Maßverkörperung für die Erzeugung der Inkrementalsignale wie auch für die Erzeugung der Referenzsignale vorgesehen wird. Für beide Abtastungen wird durch geeignete Maßnahmen sichergestellt, dass die sogenannten neutralen Drehpunkte der jeweiligen Abtastungen zusammenfallen. Unter dem neutralen Drehpunkt der jeweiligen Abtastung wird hierbei derjenige Punkt verstanden, um den eine Verkippung von Abtasteinheit und Reflexions-Maßverkörperung erfolgen kann, ohne dass ein Positionsfehler resultiert. Insbesondere bei großen Änderungen des Abtastabstands, d.h. des Abstands zwischen Abtasteinheit und Reflexions-Maßverkörperung, kann das Zusammenfallen der neutralen Drehpunkte beider Abtastungen aber nicht immer zuverlässig gewährleistet werden.

ZUSAMMENFASSUNG DER ERFINDUNG

Der vorliegenden Erfindung liegt die Aufgabe zugrunde, eine optische Positionsmesseinrichtung für den Auflicht-Betrieb anzugeben, bei der die Erzeugung von Referenzsignalen auch im Fall großer Schwankungen des Abtastabstands möglichst wenig durch eventuelle Verkippungen zwischen Abtasteinheit und Reflexionsmaßverkörperung gestört wird.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung umfasst eine Reflexions-Maßverkörperung und eine hierzu in mindestens einer Messrichtung bewegliche Abtasteinheit. Die Reflexions-Maßverkörperung weist eine inkrementale Messteilung sowie an mindestens einer Referenzposition eine Referenzmarkierung auf. Die Abtasteinheit umfasst neben Abtastmitteln für die Inkrementalsignalerzeugung zur Referenzsignalerzeugung mindestens eine Lichtquelle, eine Abbildungsoptik, eine in einer Blendenebene angeordnete Blendenstruktur sowie mehrere Detektorelemente, wobei über die Abbildungsoptik eine Abbildung der Referenzmarkierung auf die Blendenstruktur erfolgt. Die Referenzmarkierung ist auf der Reflexions-Maßverkörperung in die inkrementale Messteilung integriert angeordnet. Die Abbildungsoptik besitzt entlang einer Transversalrichtung, die senkrecht zur Messrichtung orientiert ist, eine sich verändernde, objektseitige Brennweite. Die objektseitigen Brennweiten der Abbildungsoptik sind dabei so gewählt, dass für jeden Abtastabstand zwischen Abtasteinheit und Reflexions-Maßverkörperung die objektseitige Brennweite in der Ebene des neutralen Drehpunkts der Inkrementalabtastung liegt, wobei der neutrale Drehpunkt der Inkrementalabtastung als derjenige Punkt definiert ist, um den eine Verkippung der Abtasteinheit oder der Reflexions-Maßverkörperung möglich ist, ohne dass ein Positionsfehler in den erzeugten Inkrementalsignalen resultiert.

Der neutrale Drehpunkt der Inkrementalabtastung kann in der Reflexions-Maßverkörperung auf derjenigen Seite der inkrementalen Messteilung liegen, die von der Abtasteinheit abgewandt ist.

Es ist möglich, dass die Abbildungsoptik als Fresnel-Linse ausgebildet ist.

Ferner kann die Blendenstruktur mehrere Teilbereiche aufweisen, in denen unterschiedliche Ablenkwirkungen auf die darauf einfallenden Strahlenbündel resultieren, wobei in jeder resultierenden Ablenkrichtung der Blendenstruktur ein Detektorelement nachgeordnet ist.

Hierbei können die mehreren Teilbereiche der Blendenstruktur entweder die darauf einfallenden Strahlenbündel unabgelenkt durchlassen oder mittels darin angeordneter Gitterstrukturen eine definierte räumliche Ablenkung bewirken.

Desweiteren kann die Abtasteinheit eine Abtastplatte umfassen,

- auf deren der Reflexions-Maßverkörperung abgewandten Seite die Blendenstruktur angeordnet ist und
- auf deren der Reflexions-Maßverkörperung zugewandten Seite die Abbildungsoptik angeordnet ist.

Es kann auch vorgesehen sein, dass auf den beiden Seiten der Abtastplatte ferner Abtastmittel für die Inkrementalsignalerzeugung in Form von Reflektorelementen und Gittern angeordnet sind.

Ferner ist möglich, dass die Referenzmarkierung mehrere strichförmige Strukturelemente umfasst, die entlang der Messrichtung angeordnet sind und deren Längsrichtung parallel zur Transversalrichtung orientiert ist, wobei zumindest ein Teil der Strukturelemente entlang der Transversalrichtung eine Transversalperiodizität aufweisen.

Dabei können die Strukturelemente entlang der Messrichtung mit einer sich verändernden Longitudinalperiodizität angeordnet sein, wobei sich die Longitudinalperiodizität ausgehend von einer zentralen Symmetrielinie der Referenzmarkierung beidseitig identisch verändert.

Desweiteren kann die Referenzmarkierung derart ausgebildet sein, dass ein darauf einfallendes Strahlenbündel eine Aufspaltung in mindestens zwei in Reflexion gebeugte Teilstrahlenbündel erfährt, die identisch transversal zur Messrichtung orientiert sind und in Messrichtung symmetrisch zueinander orientiert sind.

In einem möglichen Ausführungsbeispiel kann ferner vorgesehen sein, dass die Abbildungsoptik derart ausgebildet ist, dass darüber die aufgespaltenen Teilstrahlenbündel in der Blendenebene wieder zur Überlagerung kommen und dabei an der Referenzposition eine frequenzverdoppelte Abbildung der Referenzmarkierung in der Blendenebene resultiert.

Die Messteilung kann als binäres Reflexions-Phasengitter ausgebildet sein.

Ferner ist möglich, dass die Abtasteinheit je eine Lichtquelle für die Inkrementalsignalerzeugung und für die Referenzsignalerzeugung aufweist.

Deweiteren kann vorgesehen sein, dass die Abbildungsoptik derart ausgebildet ist, dass darüber auf die darauf einfallenden Teilstrahlenbündel eine gegenüber der Messrichtung transversale Ablenkwirkung oder eine Fokussierung auf die Detektorelemente resultiert.

Über die erfindungsgemäßen Maßnahmen lässt sich neben der gewünschten Verkippunempfindlichkeit auch eine große Toleranz des Systems gegenüber Schwankungen des Abtastabstands gewährleisten. Fehlerhafte Positionsmessungen, verursacht durch eine fehlerhafte Referenzierung, können bei der erfindungsgemäßen optischen Positionsmesseinrichtung nunmehr vermieden werden. Auch bei einem ggf. erforderlichen Neustart ist sichergestellt, dass nach der Referenzierung stets korrekte Absolutpositionswerte bestimmt und ausgegeben werden.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

KURZE BESCHREIBUNG DER ZEICHNUNGEN

Es zeigt

Figur 1a      eine erste Schnittansicht eines Ausführungsbeispiels der erfindungsgemäßen optischen Positionsmesseinrichtung;

Figur 1b      eine zweite Schnittansicht des Ausführungsbeispiels der erfindungsgemäßen optischen Positionsmesseinrichtung;

Figur 2      eine Teil-Draufsicht auf die Reflexions-Maßverkörperung des Ausführungsbeispiels der erfindungsgemäßen optischen Positionsmesseinrichtung;

Figur 3a      eine Detail-Ansicht der Abbildungsoptik des Ausführungsbeispiels der erfindungsgemäßen optischen Positionsmesseinrichtung;

Figur 3b      eine Detail-Ansicht der Blendenstruktur des Ausführungsbeispiels der erfindungsgemäßen optischen Positionsmesseinrichtung;

Figur 4a      eine Ansicht der Unterseite der Abtastplatte des Ausführungsbeispiels der erfindungsgemäßen optischen Positionsmesseinrichtung;

Figur 4b      eine Ansicht der Oberseite der Abtastplatte des Ausführungsbeispiels der erfindungsgemäßen optischen Positionsmesseinrichtung;

Figur 5      eine weitere Darstellung des Ausführungsbeispiels der erfindungsgemäßen optischen Positionsmesseinrichtung in Verbindung mit unterschiedlichen Abtastabständen;

Figur 6a      eine Darstellung der resultierenden Signale zur Referenzsignalerzeugung im Ausführungsbeispiel der erfindungsgemäßen Positionsmesseinrichtung;

Figur 6b    eine Darstellung mehrerer weiterverarbeiteter Signale, die aus den Signalen gemäß Figur 6a gebildet werden;

Figur 7    eine Blockschaltbild-Darstellung einer geeigneten Schaltungsanordnung zur Verarbeitung der verschiedenen Signale und zur Erzeugung des Referenzsignals gemäß den Figuren 6a, 6b;

Figur 8a, 8b    jeweils eine Detail-Ansicht der Abbildungsoptik weiterer Ausführungsbeispiele der erfindungsgemäßen optischen Positionsmesseinrichtung.

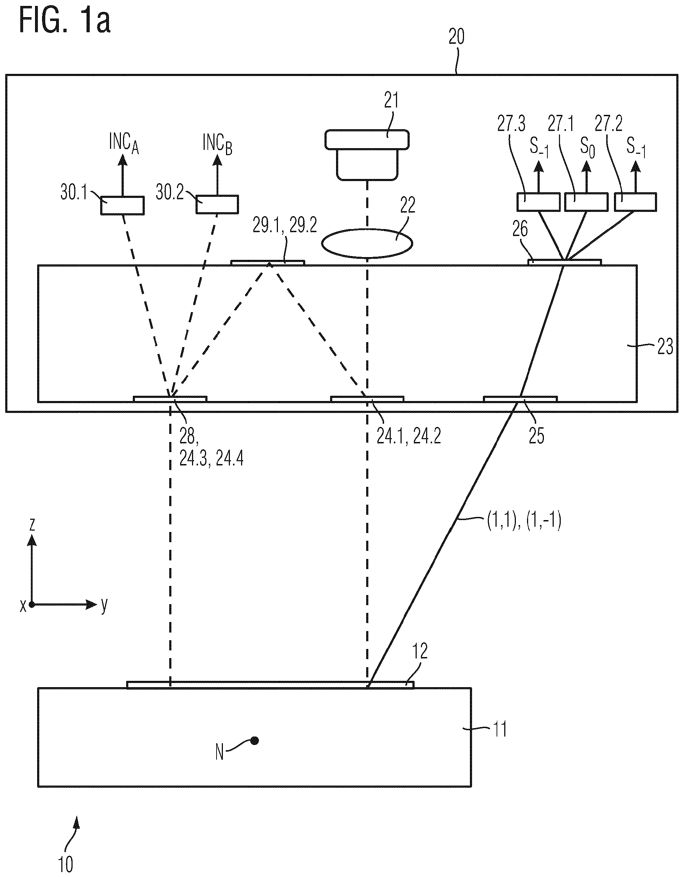

Ein Ausführungsbeispiel der erfindungsgemäßen optischen Positionsmesseinrichtung und insbesondere die Erzeugung eines Referenzsignals RI wird nachfolgend anhand der Figuren 1a - 7 erläutert.

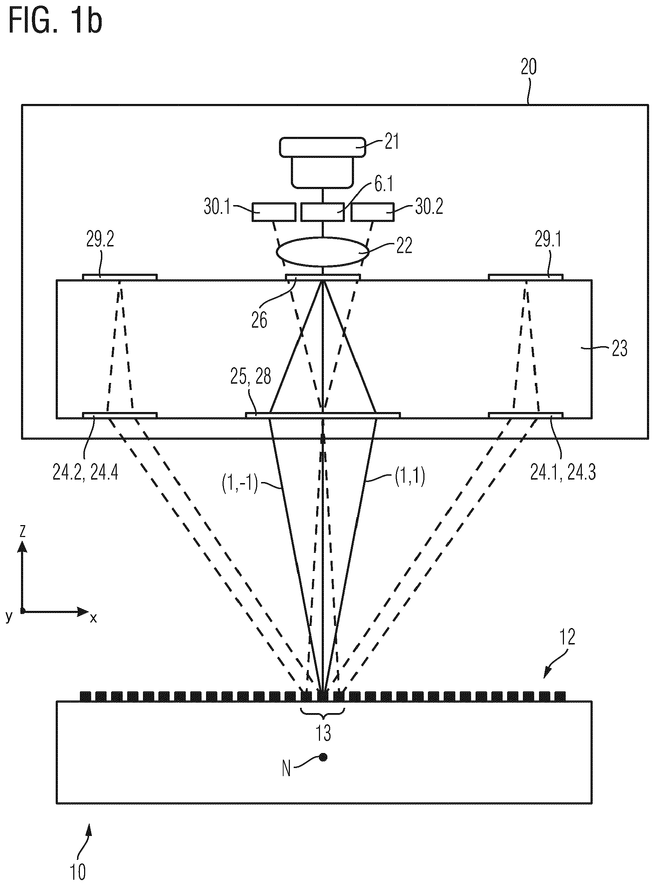

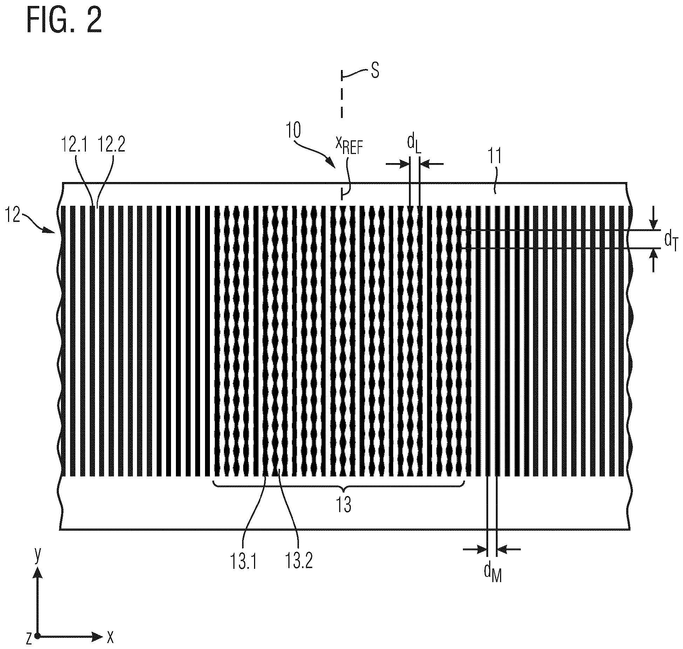

Die Figuren 1a und 1b zeigen in stark schematisierter Form Teil-Abtaststrahlengänge zur Inkremental- und Referenzsignalerzeugung in einem ersten Ausführungsbeispiel einer erfindungsgemäßen Positionsmesseinrichtung in verschiedenen Ansichten. In den Figuren 2, 3a, 3b sowie 4a und 4b sind Ansichten bzw. Teil-Ansichten der Reflexions-Maßverkörperung, der Abbildungsoptik, der Blendenstruktur sowie der Unter- und Oberseite der Abtastplatte dargestellt, die in diesem Ausführungsbeispiel verwendet werden.

Die in den Figuren veranschaulichte Variante einer erfindungsgemäßen optischen Positionsmesseinrichtung umfasst eine Reflexions-Maßverkörperung 10 sowie eine hierzu in mindestens einer Messrichtung x bewegliche Abtasteinheit 20. Die Reflexions-Maßverkörperung 10 und die Abtasteinheit 20 sind mit zwei - nicht in den Figuren gezeigten - zueinander beweglichen Objekten verbunden, beispielsweise Maschinenteilen. Über die Positionsmesseinrichtung werden Positionssignale bezüglich der Lage der beiden zueinander beweglichen Objekte erzeugt und einer - ebenfalls nicht dargestellten - Steuereinheit zugeführt. Diese nutzt die Positionsdaten in bekannter Art und Weise zu Steuerungszwecken. Die erfindungsgemäße optische Positionsmesseinrichtung kann hierbei wie im gezeigten Ausführungsbeispiel mit einer linearen Maßverkörperung zur Erfassung linearer Verschiebebewegungen ausgebildet werden. Desweiteren ist es natürlich auch möglich, eine entsprechende rotatorische Positionsmesseinrichtung mit einer kreisringförmigen Maßverkörperung zur Erfassung rotatorischer Relativbewegungen auszubilden.

Das dargestellte Ausführungsbeispiel einer erfindungsgemäßen Positionsmesseinrichtung liefert - wie nachfolgend erläutert - neben periodischen Inkrementalsignalen $INC_A$, $INC_B$ noch mehrere Signale $S_{-1}$, $S_o$, $S_1$, die zu einem Referenzsignal RI an mindestens einer bekannten Referenzposition $x_{REF}$ entlang der Messstrecke weiterverarbeitet werden. Auf die derart bestimmte Absolutposition an der Referenzposition $x_{REF}$ kann anschließend die deutlich höher auflösende Inkrementalmessung in üblicher Art und Weise bezogen werden. Die Weiterverarbeitung des Referenzsignals und der Inkrementalsignale zu einem hochauflösenden, absoluten Positionssignal kann dabei sowohl in der erfindungsgemäßen Positionsmesseinrichtung erfolgen als auch in einer nachgeordneten Folgeelektronik bzw. Steuereinheit.

Die Reflexions-Maßverkörperung 10 umfasst eine auf einem Maßstab-Träger 11 angeordnete, sich in Messrichtung x erstreckende inkrementale Messteilung 12. Wie aus Figur 2 ersichtlich, ist an mindestens einer definierten Referenzposition $x_{REF}$ in der inkrementalen Messteilung 12 die Referenzmarkierung 13 integriert angeordnet. Grundsätzlich kann natürlich auch vorgesehen werden, mehrere Referenzmarkierungen an verschiedenen Referenzpositionen anzuordnen, beispielsweise in Form sogenannter abstandscodierter Referenzmarkierungen etc..

Im vorliegenden Ausführungsbeispiel ist die inkrementale Messteilung 12 als binäres Reflexions-Phasengitter ausgebildet und besteht jeweils aus in Messrichtung x periodisch mit der Inkremental-Teilungsperiode $d_M$ angeordneten strichförmigen Teilungsbereichen 12.1, 12.2. Die verschiedenen Teilungsbereiche 12.1, 12.2 sind in Figur 2 hell bzw. dunkel dargestellt und üben unterschiedliche phasenschiebende Wirkungen auf die reflektierten Strahlenbündel aus. In einer möglichen Ausführungsform wird die Inkremental-Teilungsperiode der inkrementalen Messteilung gemäß $d_M = 2\mu m$ gewählt. Die Teilungsbereiche 12.1, 12.2 erstrecken sich in der Ebene der Reflexions-Maßverkörperung 10 senkrecht zur Messrichtung x, d.h. in der angegebenen Richtung y, welche nachfolgend auch als Transversalrichtung y bezeichnet wird.

Die in die inkrementale Messteilung 12 integrierte Referenzmarkierung 13 umfasst mehrere Gruppen von Strukturelementen 13.1, 13.2 mit einer periodischen Transversalstruktur, die in Figur 2 ebenfalls hell bzw. dunkel dargestellt sind und unterschiedliche phasenschiebende Wirkungen auf die reflektierten Strahlenbündel ausüben. Zwischen den Gruppen mit den Strukturelementen 13.1, 13.2 sind periodisch angeordnete Teilungsbereiche 12.1, 12.2 angeordnet.

Die Strukturelemente 13.1, 13.2 der Referenzmarkierung 13 sind aufeinanderfolgend entlang der Messrichtung x angeordnet, die Längsrichtung der Strukturelemente 13.1, 13.2 erstreckt sich in der Messteilungsebene senkrecht zur Messrichtung x, also ebenfalls entlang der Transversalrichtung y. Die Referenzmarkierung 13 ist hierbei als sogenannte gechirpte Referenzmarkierung ausgebildet. Dies bedeutet, dass eine Anordnung der Strukturelemente 13.1, 13.2 der Referenzmarkierung 13 entlang der Messrichtung x mit einer sich verändernden Referenzmarkierungs-Longitudinalperiodizität $d_L$ vorgesehen ist. Im konkreten Beispiel verändert sich die Referenzmarkierungs- Referenzmarkierungs-Longitudinalperiodizität $d_L$ ausgehend von einer zentralen Symmetrielinie S der Referenzmarkierung 13 beidseitig identisch, d.h. die Longitudinalperiodizität $d_L$ der Strukturelemente 13.1, 13.2 nimmt nach außen hin zu. Die nur sehr geringfügige Veränderung der Referenzmarkierungs-Longitudinalperiodizität $d_L$ ist dabei in Figur 2 nicht erkennbar.

Entlang der Transversalrichtung y weisen die Strukturelemente 13.1, 13.2 eine Referenzmarkierungs-Transversalperiodizität $d_T$ auf; insbesondere besitzen die Strukturelemente 13.1, 13.2 dabei entlang der Transversalrichtung y eine periodische Kontur, z.B. eine periodische Berandungskontur, mit der entsprechenden Referenzmarkierungs-Transversalperiodizität $d_T$.

Über eine derartige Ausgestaltung der Referenzmarkierung 13 erfährt ein senkrecht darauf einfallendes Strahlenbündel eine Aufspaltung in mindestens zwei in Reflexion gebeugte Teilstrahlenbündel, die in den Figuren mit (1, 1) bzw. (1, -1) bezeichnet werden. Diese Teilstrahlenbündel (1, 1), (1, -1) sind zum einen identisch transversal zur Messrichtung x orientiert, d.h. identisch in der yz-Ebene verkippt und zum anderen in Messrichtung x symmetrisch zueinander orientiert, d.h. in der xz-Ebene symmetrisch zur Einfallsrichtung ausgerichtet. Hierauf wird im weiteren Verlauf der Beschreibung des Teil-Abtaststrahlengangs zur Referenzsignal-Erzeugung noch detailliert eingegangen.

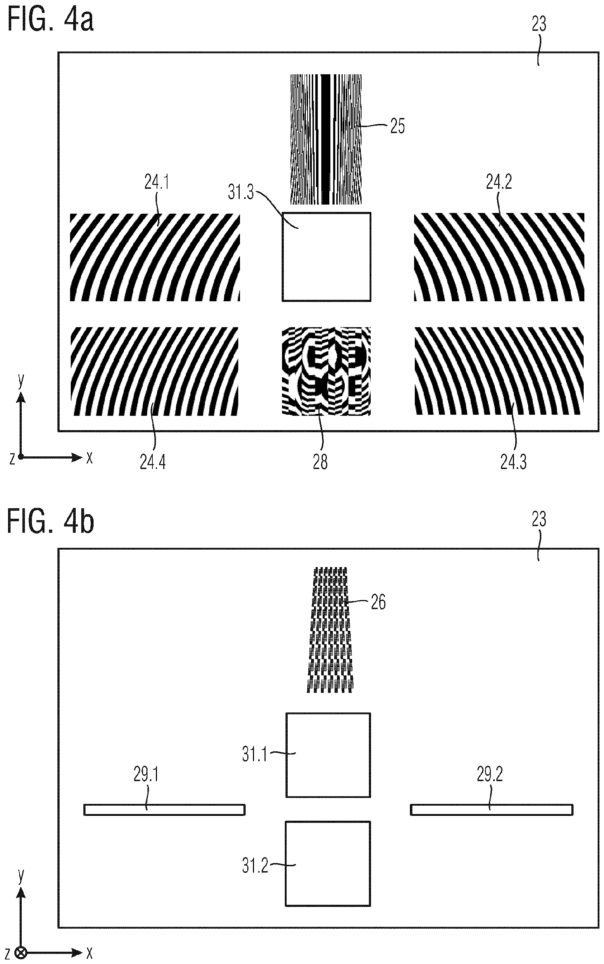

Auf Seiten der Abtasteinheit 20 sind im vorliegenden Ausführungsbeispiel einerseits Abtastmittel zur Erzeugung der Inkrementalsignale $INC_A$, $INC_B$ vorgesehen; andererseits dienen eine Lichtquelle 21, eine Abbildungsoptik 25, eine Blendenstruktur 26 sowie mehrere Detektorelemente 27.1, 27.2, 27.3 zur Referenzsignal-Erzeugung. Die Abbildungsoptik 25 sowie die Blendenstruktur 26 sind auf den gegenüberliegenden Seiten einer transparenten Abtastplatte 23 in der Abtasteinheit 20 angeordnet, wobei die Abtastplatte 23 als dünne Glasplatte ausgebildet ist. Die der Reflexions-Maßverkörperung 10 zugewandte Seite der Abtastplatte 23 wird nachfolgend auch als Unterseite derselbigen bezeichnet, die in z-Richtung entgegengesetzte Seite als Oberseite. Ansichten der Unterseite und der Oberseite der Abtastplatte sind in den Figuren 4a und 4b gezeigt.

Als Lichtquelle 21 dient im dargestellten Ausführungsbeispiel eine Laserdiode, der eine Kollimationsoptik 22 vorgeordnet ist. Vorliegend ist eine gemeinsam genutzte Lichtquelle 21 sowohl für die Erzeugung der Inkrementalsignale $INC_A$, $INC_B$ als auch für die Erzeugung der Signale $S_{-1}$, $S_0$, $S_1$ vorgesehen, aus denen das Referenzsignal RI generiert wird.

Zu den Abtastmitteln für die Inkrementalsignalerzeugung gehören neben der Lichtquelle 21 und mehreren Detektorelementen 30.1, 30.2 noch weitere optische Elemente in Form von Gittern 24.1 - 24.4, 28 und Reflektorelementen 29.1, 29.2, die auf der Ober- und Unterseite der Abtastplatte 23 angeordnet sind. Der Teil-Abtaststrahlengang zur Erzeugung der Inkrementalsignale ist in den Figuren strichliniert angedeutet; da dieser für die vorliegende Erfindung nicht weiter relevant ist, sei nachfolgend nur kurz darauf eingegangen. So erfährt das von der Lichtquelle 21 emittierte Strahlenbündel nach dem Durchlaufen der Abtastplatte 23 beim Auftreffen auf der inkrementalen Messteilung 12 gemäß Figur 1b in der xz-Ebene eine Aufspaltung in reflektierte Teilstrahlenbündel, die dann die Gitter 24.1, 24.2 in der Abtastplatte 23 durchlaufen, auf die Reflektorelemente 29.1, 29.2 auftreffen und von dort wieder in Richtung der Gitter 24.3, 24.4 und der inkrementalen Messteilung 12 zurückreflektiert werden. Von dort werden die Teilstrahlenbündel ein zweites Mal reflektiert und auf dem Gitter 28 in der Abtastplatte 23 zur Überlagerung gebracht. Vom Gitter 28 propagieren dann interferierende Paare von Teilstrahlenbündeln in Richtung der Detektorelemente 301, 30.2, über die die phasenverschobenen Inkrementalsignale $INC_A$, $INC_B$ erzeugt werden.

Nachfolgend wird der für die vorliegende Erfindung vorrangige Teil-Abtaststrahlengang zur Erzeugung des Referenzsignals RI erläutert. Der entsprechende Teil-Abtaststrahlengang ist in den Figuren 1a, 1b jeweils durchgezogen dargestellt.

Das von der Lichtquelle 21 emittierte und über die Kollimationsoptik 22 parallelgerichtete Strahlenbündel durchläuft unabgelenkt die Abtastplatte 23 und trifft bei der Referenzposition $x_{REF}$ im Bereich der Referenzmarkierung 13 senkrecht auf die Maßverkörperung 10. Über die wie vorstehend beschrieben ausgebildete Referenzmarkierung 13 erfolgt eine Aufspaltung des einfallenden Strahlenbündels in mindestens zwei in Reflexion gebeugte Teilstrahlenbündel (1,1) und (1, -1), die wie oben erwähnt orientiert sind. In Figur 1a ist hierbei die identische Verkippung der beiden reflektierten Teilstrahlenbündel (1,1) und (1, -1) in der yz-Ebene veranschaulicht, in Figur 1b ist die in Messrichtung x symmetrische Orientierung der Teilstrahlenbündel (1,1), (1, -1) in der xz-Ebene ersichtlich. Die aufgespaltenen und reflektierten Teilstrahlenbündel (1,1), (1, -1) treffen dann in der Abtasteinheit 20 auf eine Abbildungsoptik 25, die auf der der Reflexions-Maßverkörperung 10 zugewandten Seite der Abtastplatte 23 angeordnet und beispielsweise als Fresnel-Linse ausgebildet ist. Eine Ansicht der Unterseite der Abtastplatte 23 mit den dort angeordneten Gittern 24.1 - 24.4, 25, der Abbildungsoptik 25 sowie einem optisch unwirksamen Fensterbereich 31.3 ist in Figur 4a gezeigt.

Mit Hilfe der Abbildungsoptik 25 werden die aufgespaltenen Teilstrahlenbündel (1,1), (1, -1) in einer Blendenebene zur Überlagerung gebracht. In der Blendenebene ist auf der der Reflexions-Maßverkörperung 10 abgewandten Seite der Abtastplatte 23 eine Blendenstruktur 26 mit mehreren Blendenöffnungen angeordnet. Eine Ansicht der Oberseite der Abtastplatte 23 mit der Blendenstruktur 26, den Reflektorelementen 29.1, 29.2 sowie optisch unwirksamen Fensterbereichen 31.1, 31.2 ist in Figur 4b dargestellt. Die Abbildungsoptik 25 der erfindungsgemäßen Positionsmesseinrichtung ist hierbei dergestalt ausgebildet, dass beim Überfahren der Referenzmarkierung 13 eine frequenzverdoppelte Abbildung der Referenzmarkierung 13 in der Blendenebene resultiert; das heißt, die bildseitige Brennebene der Abbildungsoptik 25 fällt mit der Oberseite der Abtastplatte 23 bzw. mit der dort befindlichen Blendenebene zusammen. Hinsichtlich weiterer Details zur Ausbildung der Abbildungsoptik 25 und der Blendenstruktur 26 sei auf die nachfolgende Beschreibung verwiesen.

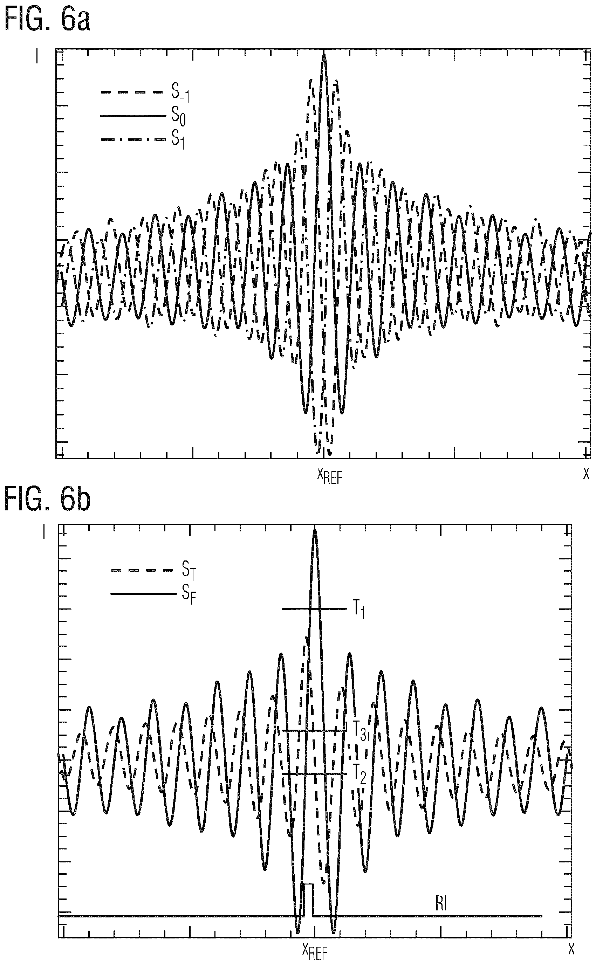

In der Abtasteinheit 20 sind der Blendenstruktur 26 nachgeordnet drei Detektorelemente 27.1 - 27.3 vorgesehen, die zur Erfassung des durch die Blendenöffnungen transmittierten Lichts und damit zur Erzeugung des Referenzsignales RI dienen. Die an den Detektorelementen 27.1 - 27.3 anliegenden Signale $S_{-1}$, $S_0$ und $S_1$ im Bereich der Referenzposition $x_{REF}$ sind in Figur 6a dargestellt. Wie aus diesen Signalen $S_{-1}$, $S_0$ und $S_1$ das letztlich interessierende Referenzsignal RI erzeugbar ist, wird im Verlauf der nachfolgenden Beschreibung noch detailliert erläutert.

Um die gewünschte Unempfindlichkeit der erfindungsgemäßen optischen Positionsmesseinrichtung gegenüber Verkippungen von Abtasteinheit 20 und Reflexions-Maßverkörperung 10 zu gewährleisten, ist vorgesehen, dass das gleiche Verhalten bezüglich einer Verkippung von Abtasteinheit und Reflexions-Maßverkörperung sowohl für die Erzeugung der Inkrementalsignale $INC_A$, $INC_B$ als auch für die Erzeugung des Referenzsignals RI sichergestellt wird. Für beide Abtastungen fallen hierzu die sogenannten neutralen Drehpunkte zusammen. Wie bereits eingangs erläutert, sei unter dem neutralen Drehpunkt der jeweiligen Abtastung derjenige Punkt verstanden, um den eine Verkippung von Abtasteinheit 20 und Reflexions-Maßverkörperung 10 erfolgen kann, ohne dass ein Positionsfehler resultiert.

Im dargestellten Ausführungsbeispiel liegt der neutrale Drehpunkt N der Inkremental-Abtastung - wie aus den Figuren 1a, 1b ersichtlich - auf derjenigen Seite der inkrementalen Messteilung 12, die von der Abtasteinheit 20 abgewandt ist, also unterhalb der Messteilungsebene im Maßstab-Träger 11. Damit ein gemeinsamer neutraler Drehpunkt mit der Referenzsignal-Erzeugung gewährleistet ist, weist die Abbildungsoptik 25 eine objektseitige Brennweite auf, die in der Ebene des neutralen Drehpunkts N der Inkrementalabtastung liegt. Um darüber hinaus sicherzustellen, dass auch im Fall schwankender Abtastabstände zwischen Maßverkörperung 10 und Abtasteinheit 20 das Zusammenfallen der neutralen Drehpunkte beider Abtastungen gewährleistet ist, ist eine weitere Maßnahme in Bezug auf die Abbildungsoptik 25 vorgesehen. So weist die Abbildungsoptik 25 senkrecht zur Messrichtung x, also entlang der bereits oben definierten Transversalrichtung y, eine sich verändernde objektseitige Brennweite auf.

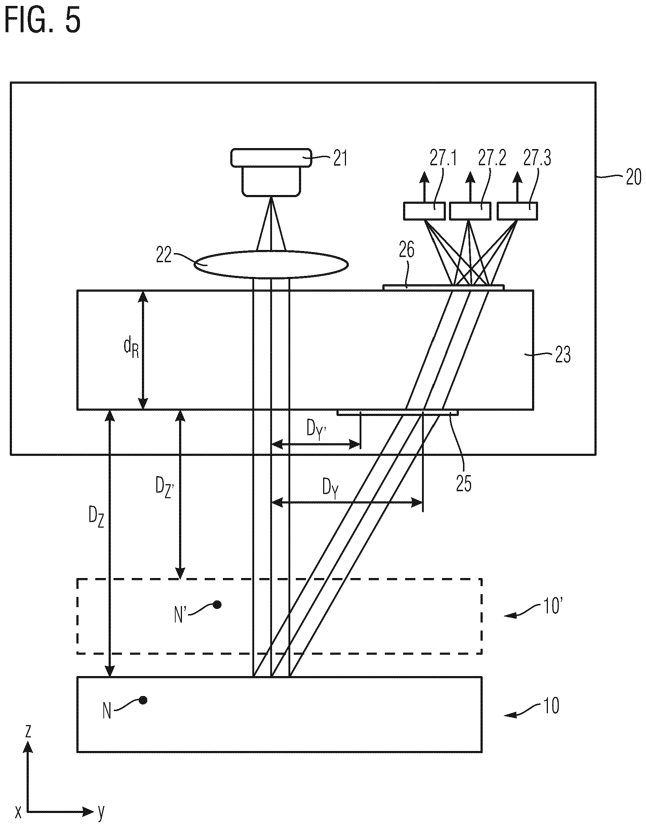

Zur Wirkung und näheren Erläuterung dieser Maßnahme sei auf die Figur 5 verwiesen, die eine Darstellung des Abtaststrahlengangs zur Referenzsignalerzeugung des ersten Ausführungsbeispiels der erfindungsgemäßen optischen Positionsmesseinrichtung im Fall zweier unterschiedlicher Abtastabstände $D_z$ bzw. $D_{z'}$ zeigt. Ändert sich der größere Abtastabstand $D_z$ in Richtung eines kleineren Abtastabstands $D_{z'}$, so ändert sich wie in Figur 5 angedeutet auch die Lage des neutralen Drehpunkts N in der Abtastplatte 23. Wie ersichtlich, verlagert sich hierbei der neutrale Drehpunkt N' etwas nach rechts. Um weiterhin sicherzustellen, dass der neutrale Drehpunkt N' auch beim Abtastabstand $D_{z'}$ in der objektseitigen Brennebene der Abbildungsoptik 24 liegt, weist die Abbildungsoptik 24 entlang der Transversalrichtung y eine sich verändernde objektseitige Brennweite auf. Im gezeigten Beispielfall etwa ist die objektseitige Brennweite der Abbildungsoptik 25 im Abstand $D_y$ (Fall: größerer Abtastabstand $D_z$) vom einfallenden Strahlenbündel größer als im Abstand $D_{y'}$ (Fall: kleinerer Abtastabstand $D_{z'}$). Für jeden möglichen Abtastabstand $D_z$, $D_{z'}$ existiert damit ein definierter Abstand $D_y$, $D_{y'}$ bezüglich des Auftreffpunkts des Teilstrahlenbündel-Hauptstrahls in der Ebene der Abbildungsoptik 25. Abhängig vom Abstand $D_y$ ist demzufolge eine in der Transversalrichtung y variierende objektseitige Brennweite der Abbildungsoptik 25 vorgesehen, abgestimmt auf den zu jedem Abstand $D_y$ gehörigen Abtastabstand $D_z$.

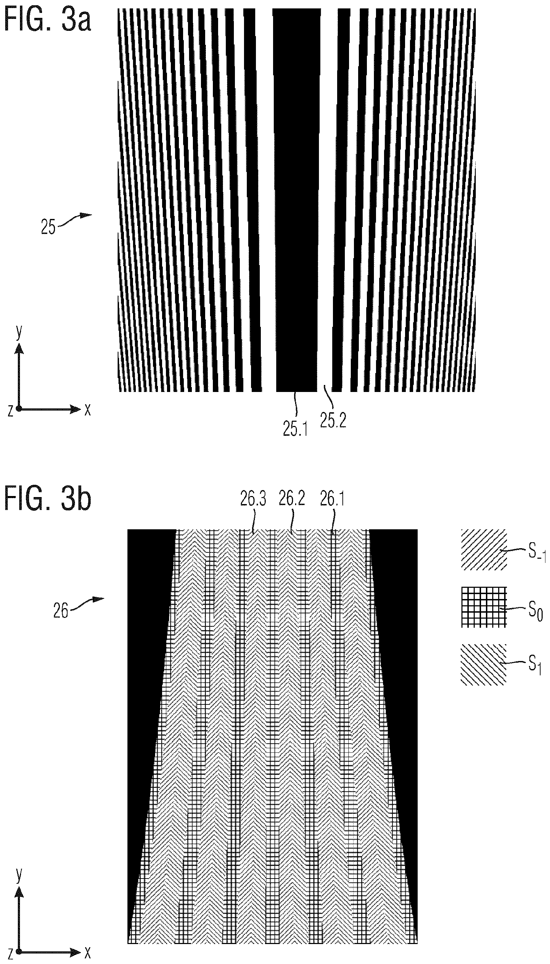

Eine Detailansicht einer entsprechend ausgebildeten Abbildungsoptik 25, ausgebildet als diffraktive Struktur in Form einer Fresnel-Linse, ist in Figur 3a gezeigt. Wie daraus ersichtlich, vergrößert sich entlang der Transversalrichtung y der Abstand benachbarter Gitterstriche 25.1, 25.2 der diffraktiven Struktur entlang der Strichrichtung y von unten nach oben geringfügig. Dies hat die gewünschte Veränderung der objektseitigen Brennweite der Abbildungsoptik 25 entlang der Transversalrichtung y zur Folge.

Beim Überfahren der Referenzmarkierung 13 resultiert über die wie erläutert ausgebildete Abbildungsoptik 25 ein Intensitätsmuster in Form eines frequenzverdoppelten Bildes der Referenzmarkierung 25 in der Blendenebene. Die dort angeordnete und in Figur 3b im Detail dargestellte Blendenstruktur 26 ist auf das in der Blendenebene resultierende Bild der Referenzmarkierung 13 abgestimmt und weist mehrere Teilbereiche 26.1, 26.2, 26.3 auf, in denen unterschiedliche räumliche Ablenkwirkungen für die darauf einfallenden Strahlenbündel resultieren. Pro Teilbereich 26.1, 26.2, 26.3 der Blendenstruktur 26 existiert damit eine definierte Ablenkrichtung; in der jeweiligen Ablenkrichtung ist der Blendenstruktur 26 jeweils ein optoelektronisches Detektorelement 27.1, 27.2, 27.3 nachgeordnet. Im dargestellten Ausführungsbeispiel ist eine Blendenstruktur 26 mit drei unterschiedlich ausgebildeten, streifenförmigen Teilbereichen 26.1 - 26.3 vorgesehen, die in Figur 3b unterschiedlich schraffiert dargestellt sind. Die verschiedenen Teilbereiche 26.1 - 26.3 sind entlang der Messrichtung x dabei mehrfach wiederholt periodisch angeordnet. Ein erster Teilbereich 26.1 ist hierbei vollständig durchlässig ausgebildet und lässt darauf einfallende Strahlenbündel unabgelenkt durch; aus diesem Teilbereich 26.1 resultiert auf dem nachgeordneten Detektor 27.1 das Signal So. Ein zweiter Teilbereich 26.2 der Blendenstruktur 26 weist ein erstes Gitter auf, das einfallendes Licht in Richtung des nachgeordneten Detektor 27.2 ablenkt und an dem das Signal $S_1$ resultiert In einem dritten Teilbereich 26.3 ist ein zweites Gitter angeordnet, das einfallendes Licht in Richtung des nachgeordneten Detektors 27.3 ablenkt, an dem das Signal $S_{-1}$ resultiert. In den Teilbereichen 26.2, 26.3 liegen damit in der Zeichenebene der Figur 1a Ablenkwirkungen der diese Teilbereiche 26.2, 26.3 passierenden Strahlenbündel nach rechts und links vor. Die in den Figuren in den Teilbereichen 26.2, 26.3 vorgesehenen, unterschiedlichen Strukturen stellen dabei jeweils nicht die dort angeordneten Gitter dar, sondern sollen lediglich schematisch veranschaulichen, dass unterschiedlich ausgebildete Teilbereiche in der Blendenstruktur 26 vorliegen.

Beim Überfahren der Referenzmarkierung 13 resultieren an den in den unterschiedlichen Ablenkrichtungen angeordneten Detektorelementen 27.1 - 27.3 dann die Signale $S_{-1}$, $S_0$ und $S_1$, aus denen das Referenzsignal RI gewonnen wird. Das sich hierbei in der Blendenebene bewegende, frequenzverdoppelte Bild der Referenzmarkierung 13 liefert aufgrund des Zusammenfallens des Bild-Intensitätsmusters mit den Teilbereichen 26.1, 26.2, 26.3 exakt an der Referenzposition $x_{REF}$ ein Maximum des Signals $S_0$, sowie Minima der Signale $S_1$, $S_{-1}$. Der entsprechende Verlauf der oszillierenden, phasenverschobenen Signale $S_0$, $S_{-1}$, $S_1$ im Bereich der Referenzposition $x_{REF}$ ist in Figur 6a gezeigt.

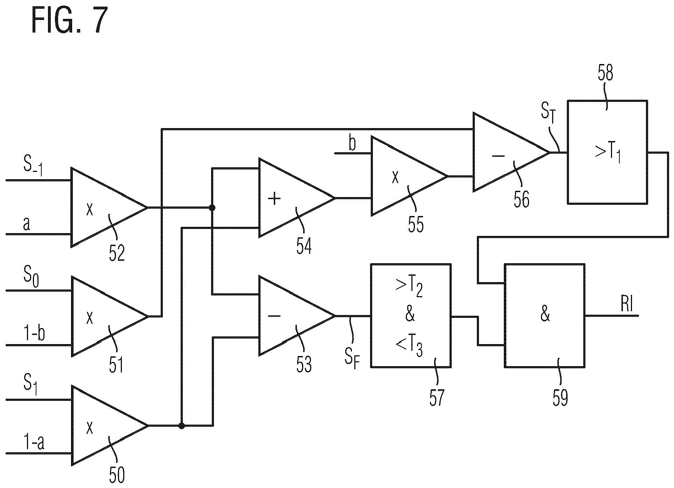

Die Weiterverarbeitung der derart gewonnenen Signale $S_0$, $S_{-1}$, $S_1$ zum Referenzsignal RI erfolgt mit Hilfe der in Figur 7 dargestellten Schaltungsanordnung. Über die dort dargestellte Verschaltung und Anordnung der elektronischen Elemente in Form von Verstärkern 50 - 52, 55 mit einstellbarer Verstärkung, einem Addierer 54 und zwei Subtrahierern 53, 56 werden gemäß der nachfolgenden Operationsvorschrift aus den Signalen $S_0$, $S_{-1}$, $S_1$ zunächst ein Torsignal $S_T$ sowie ein Flankensignal $S_F$ erzeugt:

$$\begin{pmatrix} S_T \\ S_F \end{pmatrix}(x) = \begin{pmatrix} (a-1)b & 1-b & -ab \\ 1-a & 0 & -a \end{pmatrix} \begin{pmatrix} S_{-1} \\ S_0 \\ S_1 \end{pmatrix}(x)$$

Der Verlauf der derart erzeugten Signale $S_T$, $S_F$ im Bereich der Referenzposition $x_{REF}$ ist in Figur 6b dargestellt.

Das Torsignal $S_T$ wird sodann einem Komparator 58 zugeführt, an dessen zweitem Eingang die Triggerschwelle $T_1$ anliegt und lediglich dann ein Ausgangssignal erzeugt, wenn das Torsignal $S_T$ größer als die Triggerschwelle $T_1$ ist. Das Flankensignal $S_T$ wird einem weiteren Komparator 59 zugeführt, in dem zwei Triggerschwellen $T_2$, $T_3$ gesetzt werden, so dass ein Ausgangssignal nur dann resultiert, wenn das Flankensignal $S_T$ zwischen diesen beiden Triggerschwellen $T_2$, $T_3$ liegt. Die entsprechenden Ausgangssignale der beiden Komparatoren 58, 59 werden dann einem UND-Verknüpfungselement 59 zugeführt, das aus der logischen UND-Verknüpfung das gewünschte rechteckförmige Referenzsignal RI erzeugt.

Neben dem konkret beschriebenen Ausführungsbeispiel existieren im Rahmen der vorliegenden Erfindung selbstverständlich noch weitere Ausgestaltungsmöglichkeiten.

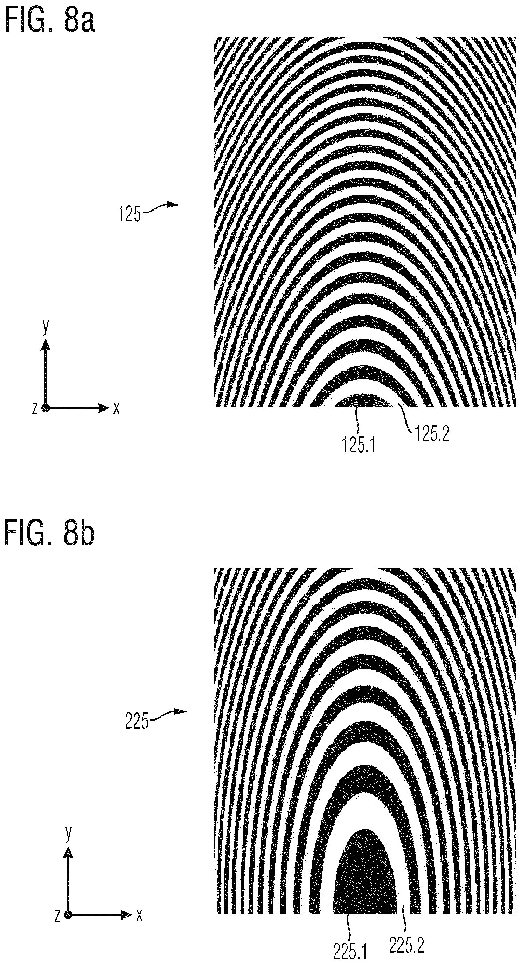

So ist es möglich, dass in die Abbildungsoptik noch zusätzlich optische Funktionalitäten integriert werden. Beispielsweise kann diese so ausgestaltet werden, dass darüber eine transversale Ablenkwirkung auf die von der Referenzmarkierung her darauf einfallenden Teilstrahlenbündel resultiert. Darüber kann etwa die Ausbreitungsrichtung der entsprechenden Teilstrahlenbündel senkrecht zur Messrichtung x verändert werden. In der Darstellung der Figur 1a würde dies eine Ablenkung der auf die Abbildungsoptik einfallenden Teilstrahlenbündel in der yz-Ebene nach links in Richtung einer Normalen auf die Abbildungsoptik bedeuten. Eine Draufsicht auf eine entsprechend ausgebildete Abbildungsoptik 125 ist in Figur 8a dargestellt. Wie aus dieser Figur ersichtlich, ist entlang der Transversalrichtung y die Transversalperiodizität der Gitterstriche 125.1, 125.2 konstant.

Weiterhin kann vorgesehen sein, dass über die Abbildungsoptik eine Fokussierung der darauf einfallenden Teilstrahlenbündel auf die nachgeordneten Detektorelemente erfolgt; eine derartige Abbildungsoptik 225 ist in Figur 8b gezeigt. In diesem Fall weist die Abbildungsoptik 225 entlang der Transversalrichtung y eine veränderliche Transversalperiodizität der Gitterstriche 225.1, 225.2 auf.

Desweiteren kann anstelle der oben erläuterten gemeinsamen Nutzung einer Lichtquelle für die Inkrementalsignal- und die Referenzsignalerzeugung in der erfindungsgemäßen optischen Positionsmesseinrichtung vorgesehen sein, dass die Abtasteinheit je eine Lichtquelle für die Inkrementalsignalerzeugung und für die Referenzsignalerzeugung aufweist.

In Bezug auf die Ausbildung der zur Referenzsignalerzeugung genutzten Blendenstruktur ist es möglich, dass sämtliche Teilbereiche der Blendenstruktur jeweils ablenkende Gitter umfassen, die jeweils eine Ablenkung in eine definierte Raumrichtung bewirken.

Dabei können die in den verschiedenen Teilbereichen angeordneten Gitterstrukturen noch zusätzlich so ausgebildet sein, dass nicht nur eine definierte räumliche Ablenkwirkung resultiert, sondern desweiteren eine Fokussierung in die jeweilige Detektionsebene des zugeordneten Detektorelements erfolgt; auf diese Art und Weise können zusätzliche Fokussieroptiken zwischen der Blendenstruktur und den Detektorelementen vermieden werden. Zu diesem Zweck können die Teilbereiche der Blendenstruktur etwa mit entsprechenden diffraktiven Zylinderlinsen versehen werden.

Desweiteren ist es auch möglich, dass der neutrale Drehpunkt der Inkrementalabtastung nicht wie im erläuterten Ausführungsbeispiel unterhalb der Messteilungsebene liegt, sondern oberhalb der Messteilungsebene. Durch die geeignete Wahl einer objektseitigen Brennweite der Abbildungsoptik muss dann analog sichergestellt werden, dass der neutrale Drehpunkt der Referenzsignalerzeugung ebenfalls in dieser Ebene zu liegen kommt usw..

**Patentansprüche**

1. Optische Positionsmesseinrichtung mit einer Reflexions-Maßverkörperung (10) und einer hierzu in mindestens einer Messrichtung (x) beweglichen Abtasteinheit (20),

   - wobei die Reflexions-Maßverkörperung eine inkrementale Messteilung (12) sowie an mindestens einer Referenzposition ($x_{REF}$) eine Referenzmarkierung (13) aufweist, und
   - wobei die Abtasteinheit neben Abtastmitteln (30.1, 30.2) für die Inkrementalsignalerzeugung zur Referenzsignalerzeugung mindestens eine Lichtquelle (21), eine Abbildungsoptik (25), eine in einer Blendenebene angeordnete Blendenstruktur (26) sowie mehrere Detektorelemente (27.1, 27.2, 27.3) umfasst und über die Abbildungsoptik eine Abbildung der Referenzmarkierung auf die Blendenstruktur erfolgt,

   **dadurch gekennzeichnet,**

   - **dass** die Referenzmarkierung (13) auf der Reflexions-Maßverkörperung (10) in die inkrementale Messteilung (12) integriert angeordnet ist, und
   - **dass** die Abbildungsoptik (25) entlang einer Transversalrichtung (y), die senkrecht zur Messrichtung (x) orientiert ist, eine sich verändernde, objektseitige Brennweite besitzt, und
   - **dass** die objektseitigen Brennweiten der Abbildungsoptik (25) so gewählt sind, dass für jeden Abtastabstand zwischen Abtasteinheit (20) und Reflexions-Maßverkörperung (10) die objektseitige Brennweite in der Ebene des neutralen Drehpunkts (N) der Inkrementalabtastung liegt, wobei der neutrale Drehpunkt (N) der Inkrementalabtastung als derjenige Punkt definiert ist, um den eine Verkippung der Abtasteinheit (20) oder der Reflexions-Maßverkörperung (10) möglich ist, ohne dass ein Positionsfehler in den erzeugten Inkrementalsignalen ($INC_A$, $INC_B$) resultiert.

2. Optische Positionsmesseinrichtung nach Anspruch 1, **dadurch gekennzeichnet, dass** der neutrale Drehpunkt (N) der Inkrementalabtastung in der Reflexions-Maßverkörperung (10) auf derjenigen Seite der inkrementalen Messteilung (12) liegt, die von der Abtasteinheit (20) abgewandt ist.

3. Optische Positionsmesseinrichtung nach mindestens einem der vorhergehenden Ansprüche, **dadurch gekennzeichnet, dass** die Abbildungsoptik (25) als Fresnel-Linse ausgebildet ist.

4. Optische Positionsmesseinrichtung nach mindestens einem der vorhergehenden Ansprüche, **dadurch gekennzeichnet, dass** die Blendenstruktur (26) mehrere Teilbereiche (26.1, 26.2, 26.3) aufweist, in denen unterschiedliche Ablenkwirkungen auf die darauf einfallenden Strahlenbündel resultieren, wobei in jeder resultierenden Ablenkrichtung der Blendenstruktur (26) ein Detektorelement (27.1, 27.2, 27.3) nachgeordnet ist.

5. Optische Positionsmesseinrichtung nach Anspruch 4, **dadurch gekennzeichnet, dass** die mehreren Teilbereiche (26.1, 26.2, 26.3) der Blendenstruktur (26) entweder die darauf einfallenden Strahlenbündel unabgelenkt durchlassen oder mittels darin angeordneter Gitterstrukturen eine definierte räumliche Ablenkung bewirken.

6. Optische Positionsmesseinrichtung nach mindestens einem der vorangehenden Ansprüche, **dadurch gekennzeichnet, dass** die Abtasteinheit (20) eine Abtastplatte (23) umfasst,

   - auf deren der Reflexions-Maßverkörperung (10) abgewandten Seite die Blendenstruktur (26) angeordnet ist und
   - auf deren der Reflexions-Maßverkörperung (10) zugewandten Seite die Abbildungsoptik (25) angeordnet ist.

7. Optische Positionsmesseinrichtung nach Anspruch 6, **dadurch gekennzeichnet, dass** auf den beiden Seiten der Abtastplatte (23) ferner Abtastmittel für die Inkrementalsignalerzeugung in Form von Reflektorelementen (29.1, 29.2) und Gittern (24.1 - 24.4, 28) angeordnet sind.

8. Optische Positionsmesseinrichtung nach mindestens einem der vorhergehenden Ansprüche, **dadurch gekennzeichnet, dass** die Referenzmarkierung (13) mehrere strichförmige Strukturelemente (13.1, 13.2) umfasst, die entlang der Messrichtung (x) angeordnet sind und deren Längsrichtung parallel zur Transversalrichtung (y) orientiert ist, wobei zumindest ein Teil der Strukturelemente (13.1, 13.2) entlang der Transversalrichtung (y) eine Transversalperiodizität ($d_T$) aufweisen.

9. Optische Positionsmesseinrichtung nach Anspruch 8, **dadurch gekennzeichnet, dass** die Strukturelemente (13.1, 13.2) entlang der Messrichtung (x) mit einer sich verändernden Longitudinalperiodizität ($d_L$) angeordnet sind, wobei sich die Longitudinalperiodizität ($d_L$) ausgehend von einer zentralen Symmetrielinie (S) der Referenzmarkierung (13) beidseitig identisch verändert.

10. Optische Positionsmesseinrichtung nach Anspruch 8, **dadurch gekennzeichnet, dass** die Referenzmarkierung (13) derart ausgebildet ist, dass ein darauf einfallendes Strahlenbündel eine Aufspaltung in mindestens zwei in Reflexion gebeugte Teilstrahlenbündel ((1,1), (1-1)) erfährt, die identisch transversal zur Messrichtung (x) orientiert sind und in Messrichtung (x) symmetrisch zueinander orientiert sind.

11. Optische Positionsmesseinrichtung nach Anspruch 10, **dadurch gekennzeichnet, dass** die Abbildungsoptik (25) derart ausgebildet ist, dass darüber die aufgespaltenen Teilstrahlenbündel ((1,1), (1-1)) in der Blendenebene wieder zur Überlagerung kommen und dabei an der Referenzposition ($x_{REF}$) eine frequenzverdoppelte Abbildung der Referenzmarkierung (13) in der Blendenebene resultiert.

12. Optische Positionsmesseinrichtung nach mindestens einem der vorhergehenden Ansprüche, **dadurch gekennzeichnet, dass** die Messteilung (12) als binäres Reflexions-Phasengitter ausgebildet ist.

13. Optische Positionsmesseinrichtung nach mindestens einem der vorhergehenden Ansprüche, **dadurch gekennzeichnet, dass** die Abtasteinheit (20) je eine Lichtquelle für die Inkrementalsignalerzeugung und für die Referenzsignalerzeugung aufweist.

14. Optische Positionsmesseinrichtung nach mindestens einem der vorhergehenden Ansprüche, **dadurch gekennzeichnet, dass** die Abbildungsoptik (125; 225) derart ausgebildet ist, dass darüber auf die darauf einfallenden Teilstrahlenbündel eine gegenüber der Messrichtung (x) transversale Ablenkwirkung oder eine Fokussierung auf die Detektorelemente resultiert.

**Claims**

1. Optical position measuring device with a reflection material measure (10) and a scanning unit (20) which is movable relative thereto in at least one measurement direction (x),

- wherein the reflection material measure has an incremental measurement graduation (12) and, at at least one reference position ($x_{REF}$), a reference mark (13), and
- wherein the scanning unit comprises, in addition to scanning means (30.1, 30.2) for the incremental signal generation, at least one light source (21), an imaging optical unit (25), a stop structure (26) arranged in a stop plane, and a plurality of detector elements (27.1, 27.2, 27.3) for the reference signal generation, and the reference mark is imaged onto the stop structure via the imaging optical unit,

**characterized**

- **in that** the reference mark (13) is arranged on the reflection material measure (10) such that it is integrated in the incremental measurement graduation (12), and
- **in that** the imaging optical unit (25) has, along a transverse direction (y) oriented perpendicular to the measurement direction (x), a changing object-side focal length, and
- **in that** the object-side focal lengths of the imaging optical unit (25) are selected such that, for each scanning distance between the scanning unit (20) and the reflection material measure (10), the object-side focal length lies in the plane of the neutral point of rotation (N) of the incremental scan, wherein the neutral point of rotation (N) of the incremental scan is defined as that point about which tilting of the scanning unit (20) or of the reflection material measure (10) is possible without a position error in the generated incremental signals ($INC_A$, $INC_B$) occurring as a result.

2. Optical position measuring device according to Claim 1, **characterized in that** the neutral point of rotation (N) of the incremental scan in the reflection material measure (10) lies on that side of the incremental measurement graduation (12) that faces away from the scanning unit (20).

3. Optical position measuring device according to at least one of the preceding claims, **characterized in that** the imaging optical unit (25) is embodied in the form of a Fresnel lens.

4. Optical position measuring device according to at least one of the preceding claims, **characterized in that** the stop structure (26) has a plurality of subregions (26.1, 26.2, 26.3), in which different deflection effects on the beams that are incident thereon occur as a result, wherein a detector element (27.1, 27.2, 27.3) is arranged downstream of the stop structure (26) in each resulting deflection direction.

5. Optical position measuring device according to Claim 4, **characterized in that** the plurality of subregions (26.1, 26.2, 26.3) of the stop structure (26) either transmit the beams that are incident thereon without deflection or bring about, by means of grating structures arranged therein, a defined spatial deflection.

**6.** Optical position measuring device according to at least one of the preceding claims, **characterized in that** the scanning unit (20) comprises a scanning reticle (23),

- on whose side facing away from the reflection material measure (10) the stop structure (26) is arranged and
- on whose side facing the reflection material measure (10) the imaging optical unit (25) is arranged.

**7.** Optical position measuring device according to Claim 6, **characterized in that** scanning means for the incremental signal generation in the form of reflector elements (29.1, 29.2) and gratings (24.1-24.4, 28) are furthermore arranged on both sides of the scanning reticle (23).

**8.** Optical position measuring device according to at least one of the preceding claims, **characterized in that** the reference mark (13) comprises a plurality of line-type structure elements (13.1, 13.2), which are arranged along the measurement direction (x) and whose longitudinal direction is oriented parallel to the transverse direction (y), wherein at least some of the structure elements (13.1, 13.2) have a transverse periodicity ($d_T$) along the transverse direction (y).

**9.** Optical position measuring device according to Claim 8, **characterized in that** the structure elements (13.1, 13.2) are arranged along the measurement direction (x) with a changing longitudinal periodicity ($d_L$), wherein the longitudinal periodicity ($d_L$) changes identically on both sides starting from a central line of symmetry (S) of the reference mark (13).

**10.** Optical position measuring device according to Claim 8, **characterized in that** the reference mark (13) is embodied such that a beam that is incident thereon is split into at least two partial beams ((1,1), (1-1)) that are diffracted in reflection, are oriented identically transversely to the measurement direction (x) and are oriented symmetrically with respect to one another in the measurement direction (x).

**11.** Optical position measuring device according to Claim 10, **characterized in that** the imaging optical unit (25) is embodied such that the split partial beams ((1,1), (1-1)) thereby come to superpose again in the stop plane and, in the process, frequency-doubled imaging of the reference mark (13) in the stop plane takes place at the reference position ($x_{REF}$) as a result.

**12.** Optical position measuring device according to at least one of the preceding claims, **characterized in that** the measurement graduation (12) is embodied in the form of a binary reflection phase grating.

**13.** Optical position measuring device according to at least one of the preceding claims, **characterized in that** the scanning unit (20) has one light source each for the incremental signal generation and for the reference signal generation.

**14.** Optical position measuring device according to at least one of the preceding claims, **characterized in that** the imaging optical unit (125; 225) is embodied such that thereby a transverse deflection effect, with respect to the measurement direction (x), on the partial beams that are incident thereon or focusing onto the detector elements takes place as a result.

**Revendications**

**1.** Dispositif optique de mesure de position, comprenant une mesure matérialisée à réflexion (10) et une unité de balayage (20) mobile par rapport à celle-ci dans au moins une direction de mesure (x),

- la mesure matérialisée à réflexion présentant une graduation de mesure incrémentale (12) ainsi qu'un marquage de référence (13) à au moins une position de référence ($x_{REF}$), et
- l'unité de balayage comprenant en plus de moyens de balayage (30.1, 30.2) pour la génération de signaux incrémentaux destinés à la génération de signaux de référence au moins source de lumière (21), un système optique de représentation (25), une structure de diaphragme (26) disposée dans un plan de diaphragme, ainsi que plusieurs éléments détecteurs (27.1, 27.2, 27.3), et une représentation du marquage de référence sur la structure de diaphragme étant effectuée par l'intermédiaire du système optique de représentation,

**caractérisé en ce que**

- le marquage de référence (13) est disposé sur la mesure matérialisée à réflexion (10) en étant intégré dans la graduation de mesure incrémentale (12), et
- le système optique de représentation (25) est orienté le long d'une direction transversale (y) qui est orientée verticalement par rapport à la direction de mesure (x), possède une distance focale variable côté objet, et
- les distances focales côté objet du système optique de représentation (25) sont sélectionnées de telle sorte que pour chaque distance de balayage entre l'unité de balayage (20) et la mesure matérialisée à réflexion (10), la distance focale côté objet se trouve dans le plan du centre de rotation neutre (N) du balayage incrémental, le centre de rotation neutre (N) du balayage incrémental étant défini comme le point autour duquel un basculement de l'unité de balayage (20) ou de la mesure matérialisée à réflexion (10) est possible sans aboutir à un défaut de position dans les signaux incrémentaux générés (INC$_A$, INC$_B$).

2. Dispositif optique de mesure de position selon la revendication 1, **caractérisé en ce que** le centre de rotation neutre (N) du balayage incrémental dans la mesure matérialisée à réflexion (10) se trouve sur le côté de la graduation de mesure incrémentale (12) qui est détournée de l'unité de balayage (20).

3. Dispositif optique de mesure de position selon au moins l'une des revendications précédentes, **caractérisé en ce que** le système optique de représentation (25) est réalisé sous la forme d'une lentille de Fresnel.

4. Dispositif optique de mesure de position selon au moins l'une des revendications précédentes, **caractérisé en ce que** la structure de diaphragme (26) présente plusieurs zones partielles (26.1, 26.2, 26.3) dans lesquelles différents effets de déviation résultent sur les faisceaux de rayons incidents sur celles-ci, un élément détecteur (27.1, 27.2, 27.3) étant placé en aval dans chaque direction de déviation résultante de la structure de diaphragme (26).

5. Dispositif optique de mesure de position selon la revendication 4, **caractérisé en ce que** les plusieurs zones partielles (26.1, 26.2, 26.3) de la structure de diaphragme (26) soit laissent passer les faisceaux de rayons incidents sur celles-ci sans les dévier, soit provoquent une déviation définie spatialement au moyen de structures de réseau disposées dans celles-ci.

6. Dispositif optique de mesure de position selon au moins l'une des revendications précédentes, **caractérisé en ce que** l'unité de balayage (20) comprend une plaque de balayage (23),

     - sur le côté détourné de la mesure matérialisée à réflexion (10) de laquelle est disposée la structure de diaphragme (26), et
     - sur le côté tourné vers la mesure matérialisée à réflexion (10) de laquelle est disposé le système optique de représentation (25).

7. Dispositif optique de mesure de position selon la revendication 6, **caractérisé en ce qu'**en outre des moyens de balayage pour la génération de signaux incrémentaux sous forme d'éléments réfléchissants (29.1, 29.2) et de réseaux (24.1 - 24.4, 28) sont disposés sur les deux côtés de la plaque de balayage (23).

8. Dispositif optique de mesure de position selon au moins l'une des revendications précédentes, **caractérisé en ce que** le marquage de référence (13) comprend plusieurs éléments structurels (13.1, 13.2) en forme de traits qui sont disposés le long de la direction de mesure (x) et dont la direction longitudinale est orientée en parallèle à la direction transversale (y), au moins une partie des éléments structurels (13.1, 13.2) présentant une périodicité transversale (d$_T$) le long de la direction transversale (y).

9. Dispositif optique de mesure de position selon la revendication 8, **caractérisé en ce que** les éléments structurels (13.1, 13.2) sont disposés le long de la direction de mesure (x) avec une périodicité longitudinale (d$_L$) variable, la périodicité longitudinale (d$_L$) variant de manière identique des deux côtés en partant d'une ligne de symétrie centrale (S) du marquage de référence (13).

10. Dispositif optique de mesure de position selon la revendication 8, **caractérisé en ce que** le marquage de référence (13) est réalisé de telle sorte qu'un faisceau de rayons incident sur celui-ci subit une séparation en au moins deux faisceaux de rayons partiels ((1,1), (1-1)) diffractés en réflexion qui sont orientés de manière identique transversalement à la direction de mesure (x) et sont orientés de manière symétrique l'un à l'autre dans la direction de mesure (x).

11. Dispositif optique de mesure de position selon la revendication 10, **caractérisé en ce que** le système optique de représentation (25) est réalisé de telle sorte que par l'intermédiaire de celui-ci, les faisceaux de rayons partiels séparés ((1,1), (1-1)) se recouvrent à nouveau dans le plan de diaphragme, et une représentation à fréquence doublée du marquage de référence (13) dans le plan de diaphragme résulte à la position de référence (x$_{REF}$).

12. Dispositif optique de mesure de position selon au moins l'une des revendications précédentes, **caractérisé en ce que** la graduation de mesure (12) est réalisée sous la forme d'un réseau de phase à réflexion binaire.

13. Dispositif optique de mesure de position selon au moins l'une des revendications précédentes, **caractérisé en ce que** l'unité de balayage (20) présente respectivement une source de lumière pour la génération de signaux incrémentaux et pour la génération de signaux de référence.

14. Dispositif optique de mesure de position selon au moins l'une des revendications précédentes, **caractérisé en ce que** le système optique de représentation (125 ; 225) est réalisé de telle sorte que par l'intermédiaire de celui-ci, un effet de déviation transversal par rapport à la direction de mesure (x) ou une focalisation sur les éléments détecteurs résulte sur les faisceaux de rayons partiels incidents sur celui-ci.

## FIG. 1a

# FIG. 1b

# FIG. 2

FIG. 3a

25

25.1  25.2

FIG. 3b

26.3  26.2  26.1

26

S_{-1}

S_0

S_1

**FIG. 4a**

**FIG. 4b**

FIG. 5

FIG. 6a

FIG. 6b

FIG. 7

FIG. 8a

FIG. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007035345 A1